# EUROPEAN PATENT SPECIFICATION

(11) **EP 1 489 303 B1**
(45) Date of publication and mention of the grant of the patent: **06.11.2013**
(21) Application number: 04253624.3
(22) Date of filing: 17.06.2004
(51) Int. Cl.: F04B 19/00

(54) **Reducing working fluid dilution in liquid systems**
Reduzierte Verdünnung in Flüssigkeitssystemen
Dilution réduite dans des systèmes fluidiques

(30) Priority: 18.06.2003 US 464156
(43) Date of publication of application: 22.12.2004
(73) Proprietor: ORTHO-CLINICAL DIAGNOSTICS, INC., Rochester, New York 14626-5101 (US)
(72) Inventor: Jacobs, Merrit, Fairport, NY 14450 (US); Ding, Zhong, Fairport, NY 14450 (US)
(74) Representative: Mercer, Christopher Paul

(56) References cited:
- WO-A-01/12327
- WO-A-03/026798
- US-A1- 2003 085 126

## Description

### BACKGROUND OF THE INVENTION

### Field of the Invention

The present invention relates to transporting fluids in channels, such as conduits. In particular, the present invention relates to a method and apparatus for transporting fluids in channels and reducing contamination and/or dilution of fluid being transported.

### Description of the Related Art

Fluid handling, for example, liquid handling in systems such as analyzers (chemical, biological and immunological), and blood typing systems (e.g., the Ortho ProVue™ system manufactured by Ortho-Clinical Diagnostics, Inc.) is known in the art. US 2003/085126 discusses the transportation of a fluid in a channel by imparting electrosmotic and electrophoretic forces. In addition, fluid handling in microfluidic systems as described in U.S. Patent Nos. 6,453,928 and 5,992,820 and in PCT publication Nos. WO 97/21090 and WO 02/18949 is also known in the art. Fluid handling systems that use air to separate different liquid samples, or to identify or provide information for different samples are also known in the art. See, e.g., U.S. Patent Nos. 4,853,336, 4,259,291, 3,479,141, 2,797,149 and 2,879,141. See also, WO 88/04052.

In fluid handling systems, it is generally known to use one fluid, hereinafter referred to as a working fluid (water, saline, etc.) to better control the fluid that is being handled, such as being aspirated or dispensed, by hydraulically coupling the metering pump motion to the fluid being metered. The working fluid helps ensure that the fluid being transported will be moved in a manner that mimics the motion of the metering pump. Air based systems or systems with part air and part working fluid are subject to the compressibility of the air; thus metering precision and accuracy may be degraded.

A disadvantage with systems filled with working fluid only is that the fluid in the system can either dilute the fluid being metered or interact chemically with that fluid. The mixing of these fluids can occur because of turbulence, diffusion at the interface, and residual boundary layer fluid on the internal walls. It is generally known to use air gaps to separate fluids being transported. The size of the air gap is generally minimized such that the increased compressibility associated with the air ideally is not so large that the handling precision and accuracy is degraded substantially. The air gap or bubble can perform the function of "scrubbing" the internal walls of residual fluid, along with providing physical separation between the two fluids.

Several factors can result in increased mixing between these two fluids, even in the presence of an air gap, which reduces the effectiveness of the air gap and can result in unsatisfactory commingling of the two fluids. Some of these factors are listed below:
- Smoothness (conversely roughness) of the interior surface of the conduit where the fluid flows, since increased roughness will retain greater amounts of fluid.
- Changes in inner diameter of the conduit, such as a lumen since a change in internal diameter will induce turbulence.
- Surface wetability of the conduit surface.
- Control of the working fluid at the end of a probe on aspiration.
- Contact angle of the working fluid and fluid being transported to the channel surface.
- Rheology of the fluids being transported since high viscosity fluids will increase the size of the boundary layer.

Accordingly, no air gap or even a single air gap between the working fluid and fluid being handled is unsatisfactory for many applications, including clinical chemistry diagnostics, immunodiagnostics, blood screening, immunohematology, and microfluidics, where the effect of contamination with the working fluid can be significant.

### SUMMARY OF THE INVENTION

One object of the invention is to overcome the disadvantages of the known art described above. Another object of the invention is to provide a method of manipulating a fluid that results in less, or preferably no contamination or undesired dilution of the fluid. Another object of the invention is to provide a system that can manipulate a fluid, such as transport or dispense a fluid that results in less, or preferably no contamination or undesired dilution of the fluid.

The foregoing and further objects of the invention are accomplished according to one aspect of the invention that provides a method of transporting a desired fluid in a channel that includes: providing a working fluid to transport the desired fluid; providing a first segment of a buffer fluid which is immiscible with the working fluid and the desired fluid; providing a first segment of the desired fluid; providing a second segment of the buffer fluid which is immiscible with the working fluid and the desired fluid; providing the desired fluid to be transported and further manipulated; and transporting the desired fluid in the channel by applying a motive force to the working fluid which in turn exerts force against the desired fluid through the first and second buffer fluid. In the present invention, the buffer fluid comprises air.

Another aspect of the invention provides a microfluidics handling system including: a microsystem platform that includes: a substrate having: a first flat, planar surface; and a second flat planar surface opposite to the first surface. The first surface has: at least one microchannel; an optional reagent source; an optional reaction chamber; a source of motive force to transport the fluid; a working fluid in the microchannels; a first segment of buffer fluid which is immiscible with the working fluid and the desired fluid; a first segment of the desired fluid; a second segment of the buffer fluid which is immiscible with the working fluid and the desired fluid; and the desired fluid to be transported and further manipulated, wherein the fluid is present in the microchannels in the order of working fluid; first buffer fluid; first segment of the desired fluid, second buffer fluid; and the desired fluid. The buffer fluid comprises air.

Further objects, features and advantages of the present invention will be apparent to those skilled in the art from detailed consideration of the preferred embodiments that follow.

### BRIEF DESCRIPTION OF THE DRAWINGS

Figure la shows a schematic view of a fluid handling system that includes a working fluid and fluid being handled with no air gap in between.

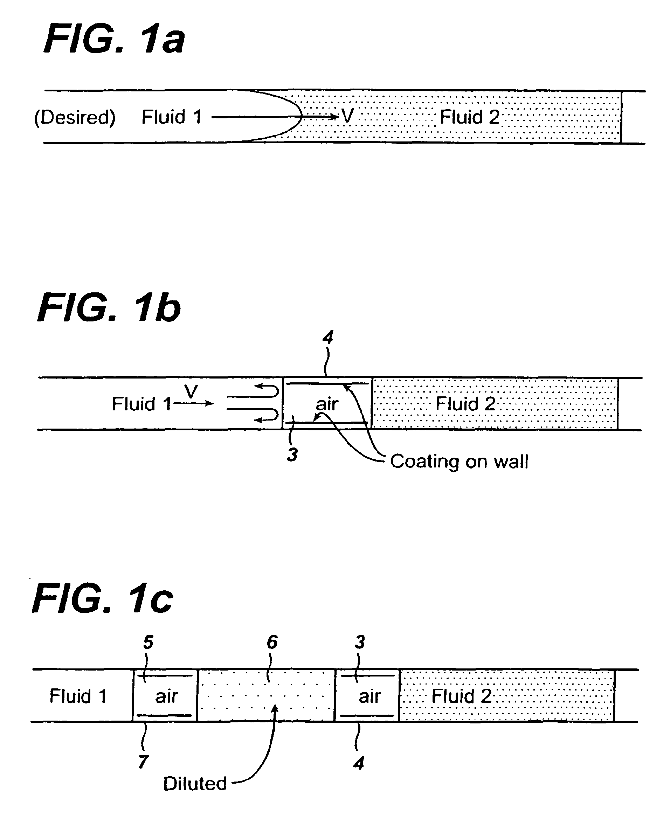

Figure 1b shows a schematic view of a fluid handling system that includes a working fluid and fluid being handled with a single air gap in between.
Figure 1c shows a schematic view of a fluid handling system that includes a working fluid and fluid being handled with a double air gap in between according to a preferred embodiment of the present invention.

### DETAILED DESCRIPTION OF PREFERRED EMBODIMENTS

In fluid handling systems having a walled channel, e.g., a conduit, fluid flow speed profile is not uniform in the walled channel; instead, the center has the highest speed. The working fluid will always mix with the desired fluid (e.g., reagent or sample) if no separation between the two is made. This depends to a large extent on their respective solubilities. Although a large "dead volume" of desired fluid can be aspirated to avoid contaminating the desired fluid by the working fluid, some contamination will always occur due to the zero velocity of fluid on the solid wall. A general practice has been to use a single bubble to separate the working fluid from the desired fluid. This technique can help reduce the contamination between the two different fluids. But avoiding contamination by a single bubble is compromised by the fact that fluid tends to coat the channel surface as it passes the channel in the liquid-air interface. The present inventors have found that by introducing a second air bubble, the liquid between the two bubbles serves as a diluent for the contaminants left by the preceding fluid. The concentration of liquid between the two bubbles is significantly lower than the working fluid. Therefore the contamination of the desired fluid is significantly reduced.

Accordingly, the present invention is directed to reducing or preferably eliminating dilution or contamination of a fluid being handled or acted upon and used in further operations (hereinafter called the "desired fluid") by a fluid that is present in the channels of the system (hereinafter called the "working fluid"), to give better control over the handling (e.g., transport or dispensing) of the desired fluid since the compressibility is lower than with a system such as air. However, as noted above, using systems with a working fluid, with or without air between the working system, continues to result in problems of contamination and dilution of the desired fluid.

The present inventors have found that incorporating a further segment of air, results in dilution and/or contamination of the desired fluid by the working fluid being reduced and/or eliminated. This is particularly true in microfluidics handling. In a preferred embodiment of the invention after the working fluid is in place, an air bubble is aspirated into the system. A selected amount of the desired fluid is then aspirated, followed by another air bubble. The desired fluid that is actually intended to be dispensed is then aspirated. Two bubbles and a layer of the same material (albeit diluted) that is going to be metered now separate the desired fluid that is being metered from the working fluid. Any contamination of the desired fluid being metered by the working fluid is therefore reduced by an order of magnitude. In this embodiment the fluid being dispensed makes contact with a bubble that makes contact with potentially diluted aliquot of the same fluid that is again separated by a bubble from the working fluid.

Along these same lines, the present invention also includes other embodiments of adding additional separator segments of buffer fluid (e.g., air) and desired fluid as needed to get the proper amount of separation. A major advantage is that two bubbles provide for four fluid interfaces instead of two, with each fluid-air interface having the ability to reduce the boundary layer surface film. This results in better carry-in control with small volumes of total air in the system and enabling a system to function acceptably with deficiencies in the mechanical design. That is, use of the present invention can provide required separation between working fluid and desired fluid in systems where geometric and size considerations would prohibit the use of large dead spaces of desired fluid. This can be important since small channel size is essential for micro-fluidics and it also reduces carry-in or the dilution effect.

"Desired fluid" and "working fluid" have been defined as above. The desired fluid can include any fluid that will be subjected to further operations, such as analysis. For example, the desired fluid can include blood or any other body fluid that will be analyzed for the presence of an analyte. As used herein "analyte" is any molecule or molecules that are to be detected and/or quantified in a sample. Preferred analytes include biomolecules such as nucleic acids, antibodies, proteins, sugars, and the like. As used herein "blood" broadly includes whole blood or any component of whole blood, such as red blood cells, plasma, serum, etc.

The working fluid is incorporated into a channel of an apparatus, such as an analyzer or microfluidic handling system. The working fluid can be a fluid that is replaced often, such as with every use, or is more permanent and may be replaced only periodically or even never. The working fluid can include fluids such as saline, water, inert oil such as silicone oil, heptane, etc.

As used herein, "channel" refers to a path that directs fluid flow in a particular direction. The channel can be formed as a groove or trench having a bottom and sides, or as a fully enclosed tube or conduit. The channel can have virtually any cross-section, e.g., circular, square, rectangular, triangular, V-shaped, U-shaped, hexagonal, octagonal, irregular, and so forth. The channel can have any convenient configuration including, but not limited to, linear, curved, serpentine (e.g.*,* a linear portion joined by a curve or loop to another linear portion, which is itself joined by a curve or loop to a third linear branch). The channel may have abrupt changes, e.g., step-wise changes in diameter, such as due to different tubing being joined. For example, if plastic tubing is fitted onto the outside diameter of a metal tube, the transition will abruptly transition from the larger diameter of the plastic tubing to the smaller diameter of the metal tube. The term "microchannel" is used herein in microfluidics embodiments for a channel having a characteristic dimension of about 100 µm or less.

Located between the working fluid and desired fluid is the first and second buffer fluid. The first buffer fluid will be positioned between the working fluid and a first segment of the desired fluid. Positioned between the first segment of the desired fluid and a further segment of the desired fluid is the second buffer fluid. The first and second buffer fluid are the same. A requirement of the buffer fluid is that it be immiscible with the desired fluid and the working fluid. As used herein, the term "immiscible" refers to the absence of substantial mixing between two different fluids. Thus, a first fluid is immiscible in a second when the two fluids are maintained separate fluid phases under the conditions used. According to the invention, the buffer fluids are air. In some embodiments, more than two segments of buffer fluid may be used. In those instances, a third, fourth, etc. of buffer fluid/desired fluid segments may be used.

A motive force is provided for moving the fluids through the channel. The motive force can be provided by any suitable device. For example, for systems such as clinical analyzers or blood typing systems, a conventional pumping system or an aspirating dispensing probe, etc. can be used.

For microfluidic systems, smaller amounts of fluid are moved. In such instances the motive force can be supplied by centripetal action such as described in WO 97/21090 or electrode based pumping such as described in U.S. Patent No. 5,992,820.

The desired fluid which has been manipulated or transported will generally be used in another operation, such as being dispensed onto a test element to be analyzed, or into gel blood typing cards, such as the MTS ID-Micro Typing System™ gel cards. Such cards contain microtubes containing a gel for agglutinating red blood cells present in a sample. Further description can be found in U.S. Patent Nos. 5,650,068 and 5,552,064. As used herein, a "test element" means any reaction vessel in which at least one reagent has been supplied, for example so-called dried slide test elements such as are described in, e.g., U.S. Pat. No. 3,992,158; or a cup or well having a cavity pre-coated with one or more antibodies, such as is described in U.S. Pat. No. 5,441,895, or an uncoated cavity to which reagent is added. In a preferred embodiment the system is a clinical analyzer and after the desired fluid has been dispensed into the test element, the test element will be further incubated, additional reagents add can be added, and the test element can be read using a spectrophotomer. A particularly preferred use for the present invention is in an automated instrument for immunohematological testing of blood, such as the MTS ProVue™ described above. A preferred instrument includes: a sample and reagent metering system that includes the fluid handling system of the present invention, one or more gel test cards, such as the MTS ID-Micro Typing System™; an incubator for incubating one or more gels cards; a centrifuge for centrifuging one or more gel cards; and an image recorder and processor for recording an image of the test card and processing the results to determine one or more of the following agglutination strength of weak to strong (0+,1+,2+,3+,4+), empty gel card, double cell population, excess red cells and no results determined. The image recorder and processor can be those well known in the art and would typically include a camera for recording the image of the card, a memory for storing the image and a microprocessor for analyzing the image.

The present invention is also particularly useful in microfluidics or fluid micromanipulation. Such systems are described in publications such as WO 97/21090 described above. In microfluidic systems, preferred micro channels include, but are not limited to, tubes, grooves, channels formed by opposed barriers, and the like.

In a preferred microfluidic device, the channel is a groove formed in the surface of a substrate, and the device includes a cover element that overlies and seals the channel. In a variation of this embodiment, the cover element is removably attached to the substrate.

Particularly preferred channel/cover element/projecting member materials include, but are not limited to, glass, silicon, quartz or other minerals, plastic(s), ceramics, metals, paper, metalloids, semiconductive materials, cements, and the like. In addition, substances that form gels, such as proteins *(e.g.*, gelatins), lipopolysaccharides, silicates, agarose and polyacrylamides can be used. A wide variety of organic and inorganic polymers, both natural and synthetic, can be employed as channel materials. Illustrative polymers include polyethylene, polypropylene, poly(4-methylbutene), polystyrene, polymethacrylate, poly(ethylene terephthalate), rayon, nylon, poly(vinyl butyrate), polyvinylidene difluoride (PVDF), polydimethylsiloxane (PDMS), silicones, polyformaldehyde, cellulose, cellulose acetate, nitrocellulose, and the like.

Polymeric channel materials can be rigid, semi-rigid, or non-rigid, opaque, semi-opaque, or transparent depending upon the use for which they are intended. For example, devices that include all optical or visual detection element are generally fabricated, at least in part, from transparent materials to allow or at least facilitate that detection. Alternatively, transparent windows of, *e.g*., glass or quartz can be incorporated into the device. Additionally, the polymeric materials may have linear or branched backbones and may be crosslinked or noncrosslinked. Examples of particularly preferred polymeric materials include, e.g., polydimethylsiloxane (PDMS), polyurethane, polyvinylchloride (VPC), polystyrene, polysulfone, polycarbonate, and the like. As described above, the channel in this embodiment is a component of a microfluidic device. Methods of fabricating the channels used in the microfluidic aspect of the invention are well known to those of skill in the art. For example, where the channels are fabricated on a surface, they can be formed using standard techniques, e.g*.*, they can be machined, molded, carved, etched, laminated, extruded, or deposited, etc*.* Such methods are more fully described in WO 02/18949.

The buffer fluid can be incorporated into the system in any know manner. For example, in a clinical analyzer, the buffer fluid, which is air, can be aspirated into the system through the metering probe from the surrounding air. For microfluidic embodiments, electrode induced bubbles may be used, as described in U.S. Patent No. 5,992,820 described above.

In some systems, it may be possible to add additional buffer fluids such as silicone oil between each desired and/or working fluid segments. One example of two buffer fluids between two desired fluid segments include air and silicone oil as described in U.S. Patent No. 3,479,141. This has the advantage of preventing a so-called "softening" of the system due to a gas being the buffer fluid. However, because of the increased likelihood of dilution, it is generally preferred to have only a single buffer fluid (air) between each desired and/or working fluid segments.

Figure 1a shows a system that does not include a buffer fluid between the working fluid (2) and the desired fluid (1). In this instance, unless the working fluid and desired fluid are immiscible, there will be considerable dilution of the desired fluid for a significant length of the channel. Figure 1b shows a single air bubble (3), where the working fluid is retained in a residual boundary layer (4) with the channel sidewalls. In this instance, considerable dilution of the desired fluid (1) results due to this residual working fluid in the air bubble (3). Figure 1c shows an embodiment of the present invention. In this embodiment, a first air bubble (3) is introduced, followed by a first segment (6) of the desired fluid. After the first segment of desired fluid, another air bubble (5) is introduced, followed by the desired fluid (1). The first air bubble (3) contains the working fluid retained at the boundary layer (4) as in Figure 1b, resulting in considerable dilution of the segment of desired fluid (6). However, the presence of the second air bubble (5) results in a further boundary layer (7) of desired fluid that is significantly less diluted with working fluid than the boundary layer in the first air bubble (3). As a result the desired fluid (1) further dispensed or further manipulated will be significantly less diluted with working fluid.

Another aspect of the invention provides an analyzer that aspirates and dispenses sample to be analyzed and/or reagents using the method described. The analyzer includes a sample reservoir, optionally a reagent reservoir, a fluid handling system that can transport and dispense a sample and/or reagents, optionally an incubator and a detector, such as a spectrophotometer. The fluid handling system is preferably an aspirating/dispensing probe that includes a disposable tip. The sample, reagent and buffer fluid, preferably air, enter the fluid handling system through the probe tip. Typical analyzers, such as immunoassay analyzer systems, can be found in U.S. Patent No. 6,096,561 and EP-A-1 116953.

It will be apparent to those skilled in the art that various modifications and variations can be made to the compounds, compositions and processes of this invention. Thus, it is intended that the present invention cover such modifications and variations, provided they come within the scope of the appended claims.

## Claims

1. A method of transporting a desired fluid (1) in a channel comprising:
providing a working fluid (2) to transport the desired fluid;
providing a first segment (3) of a buffer fluid which is immiscible with the working fluid and the desired fluid;
providing a first segment (6) of the desired fluid;
providing a second segment (5) of the buffer fluid which is immiscible with the working fluid and the desired fluid;
providing the desired fluid (1) to be transported and further manipulated; and transporting the desired fluid in the channel by applying a motive force to the working fluid which in turn exerts force against the desired fluid through the first and second segments of the buffer fluid,
**characterised in that** the buffer fluid comprises air.

2. A method as claimed in claim 1, wherein the desired fluid contains an analyte to be analyzed.

3. A method as claimed in any one of claims 1 to 2, wherein the desired fluid contains blood to be typed.

4. A method as claimed in any one of claims 1 to 3, wherein the working fluid comprises silicone oil.

5. A method as claimed in any one of claims 1 to 4, wherein the channel is a conduit.

6. A method as claimed in any one of claims 1 to 5, wherein the channel step-wise changes cross-section.

7. A method as claimed in claim 6, wherein the channel changes from a plastic tube to a metal tube.

8. A method as claimed in any one of claims 1 to 7, wherein the channel is not smooth.

9. A method according to any one of claims 1 to 8, wherein the channel is part of a dispensing nozzle and the desired fluid is dispersed and/or aspirated.

10. The method of claim 1 used to prevent or reduce contamination or dilution of a fluid being transported in a channel.

11. A method as claimed in claim 1, wherein the working fluid is present in the channel prior to the desired fluid.

12. A microfluidics handling system comprising:
a microsystem platform that comprises:
a substrate having:
a first flat, planar surface; and
a second flat planar surface opposite to the first surface, wherein the first surface comprises:
at least one microchannel;
an optional reagent source;
an optional reaction chamber;
a source of motive force to transport the fluid;
a working fluid (2) in the microchannels;
a first segment (3) of a buffer fluid which is immiscible with the working fluid and the desired fluid;
a first segment (6) of the desired fluid;
a second segment (5) of the buffer fluid which is immiscible with the working fluid and the desired fluid; and
the desired fluid (1) to be transported and further manipulated, wherein the fluid is present in the microchannels in the order of working fluid; first segment of the buffer fluid; first segment of the desired fluid, second segment of the buffer fluid; and the desired fluid,
**characterised in that** the buffer fluid comprises air.

13. An analyzer for analyzing a fluid sample containing an analyte comprising:
the microfluidics fluid handling system of claim 12;
a source of a fluid sample containing an analyte to be analyzed, wherein the fluid sample is the desired fluid to be transported and further manipulated;
a sample receiving element for receiving the fluid sample to be analyzed; and
a detector for detecting the analyte contained in the fluid.

14. An analyzer as claimed in claim 13, wherein the fluid handling system comprises an aspirating and dispensing probe and a disposable tip.

15. An apparatus for immunohematological testing of blood comprising:
a sample and reagent metering system;
a gel test card containing multiple microtubes having a gel for agglutinating red blood cells contained in the sample;
an incubator for incubating one or more gels cards;
a centrifuge for centrifuging one or more gel cards; and
an image recorder and processor for recording an image of the test card and processing the results to determine one or more of the following: agglutination strength of weak to strong (0+,1+,2+,3+,4+), empty gel card, double cell population; excess red cells and no results determined,
wherein the sample and reagent metering system includes the microfluidics handling system according to claim 12..

16. A handling system according to claim 15, wherein the source of motive force spins the substrate or platform to provide a centripetal force.

17. A handling system according to claim 15 or claim 16, wherein the source of motive force is an electrode based pump.

## Patentansprüche

1. Verfahren zum Transportieren eines gewünschten Fluids (1) in einem Kanal, umfassend:
Bereitstellen eines Arbeitsfluids (2) zum Transportieren des gewünschten Fluids;
Bereitstellen eines ersten Segmentes (3) eines Pufferfluids, das mit dem Arbeitsfluid und dem gewünschten Fluid unvermischbar ist;
Bereitstellen eines ersten Segmentes (6) des gewünschten Fluids;
Bereitstellen eines zweiten Segmentes (5) des Pufferfluids, das mit dem Arbeitsfluid und dem gewünschten Fluid unvermischbar ist;
Bereitstellen des gewünschten Fluids (1), das transportiert und weiter verarbeitet werden soll; und
Transportieren des gewünschten Fluids im Kanal durch Anwenden einer Antriebskraft auf das Arbeitsfluid, das wiederum Kraft auf das gewünschte Fluid über das erste und zweite Segment des Pufferfluids ausübt,
**dadurch gekennzeichnet, dass** das Pufferfluid Luft umfasst.

2. Verfahren nach Anspruch 1, wobei das gewünschte Fluid einen Analyten enthält, der analysiert werden soll.

3. Verfahren nach einem der Ansprüche 1 bis 2, wobei das gewünschte Fluid Blut enthält, das typisiert werden soll.

4. Verfahren nach einem der Ansprüche 1 bis 3, wobei das Arbeitsfluid Silikonöl umfasst.

5. Verfahren nach einem der Ansprüche 1 bis 4, wobei der Kanal ein Rohr ist.

6. Verfahren nach einem der Ansprüche 1 bis 5, wobei der Kanal schrittweise den Querschnitt ändert.

7. Verfahren nach Anspruch 6, wobei der Kanal von einem Kunststoffrohr in ein Metallrohr übergeht.

8. Verfahren nach einem der Ansprüche 1 bis 7, wobei der Kanal nicht glatt ist.

9. Verfahren nach einem der Ansprüche 1 bis 8, wobei der Kanal Teil einer Dosierdüse ist und das gewünschte Fluid dispergiert und/oder angesaugt ist.

10. Verfahren nach Anspruch 1, das zum Verhindern oder Reduzieren von Kontamination oder Verdünnung eines Fluids verwendet wird, welches in einem Kanal transportiert wird.

11. Verfahren nach Anspruch 1, wobei das Arbeitsfluid im Kanal vor dem gewünschten Fluid vorhanden ist.

12. Mikrofluidik-Handhabungssystem, umfassend:
eine Mikrosystemplattform, die Folgendes umfasst:
ein Substrat, das Folgendes hat:
eine erste ebene, planare Fläche; und
eine zweite ebene, planare Fläche gegenüber der ersten Fläche, wobei die erste Fläche Folgendes umfasst:
mindestens einen Mikrokanal;
eine optionale Reagenzienquelle;
eine optionale Reaktionskammer;
eine Quelle der Antriebskraft zum Transportieren des Fluids;
ein Arbeitsfluid (2) in den Mikrokanälen;
ein erstes Segment (3) eines Pufferfluids, das mit dem Arbeitsfluid und dem gewünschten Fluid unvermischbar ist;
ein erstes Segment (6) des gewünschten Fluids;
ein zweites Segment (5) des Pufferfluids, das mit dem Arbeitsfluid und dem gewünschten Fluid unvermischbar ist; und
das gewünschte Fluid (1), das transportiert und weiter verarbeitet werden soll, wobei das Fluid in den Mikrokanälen in der Reihenfolge Arbeitsfluid; erstes Segment des Pufferfluids; erstes Segment des gewünschten Fluids, zweites Segment des Pufferfluids; und das gewünschte Fluid vorliegt,
**dadurch gekennzeichnet, dass** das Pufferfluid Luft umfasst.

13. Analysator zum Analysieren einer Fluidprobe, die einen Analyten enthält, umfassend:
das Mikrofluidik-Handhabungssystem nach Anspruch 12;
eine Quelle einer Fluidprobe, die einen Analyten enthält, welcher analysiert werden soll, wobei die Fluidprobe das gewünschte Fluid ist, das transportiert und weiter verarbeitet werden soll;
ein Probenaufnahmeelement zum Aufnehmen der Fluidprobe, die analysiert werden soll; und
einen Detektor zum Feststellen des Analyten, der im Fluid enthalten ist.

14. Analysator nach Anspruch 13, wobei das Fluidhandhabungssystem eine Ansauge- und Dosiersonde und eine Einmalgebrauchsspitze umfasst.

15. Vorrichtung zum immunhämatologischen Prüfen von Blut, umfassend:
ein Proben- und Reagenziendosierungssystem;
eine Gelprüfkarte, die mehrere Mikroröhrchen enthält, welche ein Gel zum Agglutinieren von roten Blutkörperchen hat, die in der Probe enthalten sind;
einen Inkubator zum Inkubieren von einer oder mehreren Gelkarten;
eine Zentrifuge zum Zentrifugieren von einer oder mehreren Gelkarten; und
einen Bildrekorder und Prozessor zum Aufzeichnen eines Bildes der Prüfkarte und Verarbeiten der Ergebnisse, um ein oder mehrere der folgenden Elemente zu bestimmen: Agglutinierungsstärke von schwach bis stark (0+,1+,2+,3+,4+), leere Gelkarte, doppelte Zellpopulation; überschüssige rote Blutkörperchen und keine Ergebnisse ermittelt,
wobei das Proben- und Reagenziendosierungssystem das Mikrofluidik-Handhabungssystem nach Anspruch 12 umfasst.

16. Handhabungssystem nach Anspruch 15, wobei die Quelle der Antriebskraft das Substrat oder die Plattform dreht, um für eine Zentripetalkraft zu sorgen.

17. Handhabungssystem nach Anspruch 15 oder 16, wobei die Quelle der Antriebskraft eine Pumpe auf Elektrodenbasis ist.

## Revendications

1. Procédé de transport d'un fluide souhaité (1) dans un canal, comportant les étapes consistant à :
mettre en place un fluide (2) de travail to transport le fluide souhaité ;
mettre en place un premier segment (3) d'un fluide tampon qui est immiscible avec le fluide de travail et le fluide souhaité ;
mettre en place un premier segment (6) du fluide souhaité ;
mettre en place un deuxième segment (5) du fluide tampon qui est immiscible avec le fluide de travail et le fluide souhaité ;
mettre en place le fluide souhaité (1) à transporter et manipuler davantage ; et
transporter le fluide souhaité dans le canal en appliquant une force motrice au fluide de travail, qui exerce lui-même une force contre le fluide souhaité par l'intermédiaire des premier et deuxième segments du fluide tampon,
**caractérisé en ce que** le fluide tampon comporte de l'air.

2. Procédé selon la revendication 1, le fluide souhaité contenant un analyte à analyser.

3. Procédé selon l'une quelconque des revendications 1 à 2, le fluide souhaité contenant du sang à grouper.

4. Procédé selon l'une quelconque des revendications 1 à 3, le fluide de travail comportant de l'huile de silicone.

5. Procédé selon l'une quelconque des revendications 1 à 4, le canal étant un conduit.

6. Procédé selon l'une quelconque des revendications 1 à 5, la section droite du canal variant par échelons.

7. Procédé selon la revendication 6, le canal changeant d'un tube en plastique à un tube métallique.

8. Procédé selon l'une quelconque des revendications 1 à 7, le canal n'étant pas lisse.

9. Procédé selon l'une quelconque des revendications 1 à 8, le canal faisant partie d'une buse de distribution et le fluide souhaité étant dispersé et / ou aspiré.

10. Procédé selon la revendication 1, utilisé pour empêcher ou réduire la contamination ou la dilution d'un fluide en cours de transport dans un canal.

11. Procédé selon la revendication 1, le fluide de travail étant présent dans le canal avant le fluide souhaité.

12. Système micro-fluidique de manipulation comportant :
une plate-forme de microsystème qui comporte :
un substrat présentant :
une première surface planaire plate ; et
une deuxième surface planaire plate opposée à la première surface, la première surface comportant :
au moins un micro-canal ;
une source de réactif optionnelle ;
une chambre de réaction optionnelle ;
une source de force motrice pour transporter le fluide ;
un fluide (2) de travail dans les micro-canaux ;
un premier segment (3) d'un fluide tampon qui est immiscible avec le fluide de travail et le fluide souhaité ;
un premier segment (6) du fluide souhaité ;
un deuxième segment (5) du fluide tampon qui est immiscible avec le fluide de travail et le fluide souhaité ; et
le fluide souhaité (1) à transporter et manipuler davantage, le fluide étant présent dans les micro-canaux dans l'ordre fluide de travail ; premier segment du fluide tampon ; premier segment du fluide souhaité, deuxième segment du fluide tampon ; et fluide souhaité,
**caractérisé en ce que** le fluide tampon comporte de l'air.

13. Analyseur destiné à analyser un échantillon de fluide contenant un analyte, comportant :
le système micro-fluidique de manipulation de fluide de la revendication 12 ;
une source d'un échantillon de fluide contenant un analyte à analyser, l'échantillon de fluide étant le fluide souhaité à transporter et manipuler davantage ;
un élément récepteur d'échantillon servant à recevoir l'échantillon de fluide à analyser ; et
un détecteur servant à détecter l'analyte contenu dans le fluide.

14. Analyseur selon la revendication 13, le système de manipulation de fluide comportant une sonde d'aspiration et de distribution et un embout jetable.

15. Appareil de test immuno-hématologique de sang, comportant :
un système de dosage d'échantillon et de réactif ;
une carte de test sur gel contenant des micro-tubes multiples dotés d'un gel destiné à agglutiner des globules rouges contenus dans l'échantillon ;
un incubateur servant à incuber une ou plusieurs cartes à gel ;
une centrifugeuse servant à centrifuger une ou plusieurs cartes à gel ; et
un dispositif d'enregistrement et de traitement d'images servant à enregistrer une image de la carte de test et à traiter les résultats pour déterminer un ou plusieurs des éléments suivants : force d'agglutination de faible à forte (0+,1+,2+,3+,4+), carte à gel vide, double population de cellules ; globules rouges en excès et aucun résultat déterminé,
le système de dosage d'échantillon et de réactif comprenant le système micro-fluidique de manipulation selon la revendication 12.

16. Système de manipulation selon la revendication 15, la source de force motrice faisant tourner le substrat ou la plate-forme pour générer une force centripète.

17. Système de manipulation selon la revendication 15 ou la revendication 16, la source de force motrice étant une pompe à électrodes.
